# FASCICULE DE BREVET EUROPEEN

(11) **EP 2 397 247 B1**
(45) Date de publication et mention de la délivrance du brevet: **04.10.2017**
(21) Numéro de dépôt: 10166525.5
(22) Date de dépôt: 18.06.2010
(51) Int. Cl.: B23B 31/20

(54) **Dispositif et procédé de réglage d'une pince pour une machine-outil**
Vorrichtung und Verfahren zum Einstellen einer Spannzange einer Werkzeugmaschine
Device for and method of adjusting a collet of a machine-tool

(43) Date de publication de la demande: 21.12.2011
(73) Titulaire: Tornos SA, 2740 Moutier (CH)
(72) Inventeur: Vettori, Marco, 2732 Loveresse (CH); Zannato, Joseph, 2824 Vicques (CH)
(74) Mandataire: BOVARD AG

(56) Documents cités:
- WO-A1-00/13827
- DE-A1- 4 025 944
- DE-U1- 8 913 330
- FR-A1- 2 024 391
- FR-A5- 2 097 214
- US-A- 2 821 404
- US-A- 5 524 909
- US-A- 5 806 859
- US-B1- 6 257 595

## Description

### DOMAINE DE L'INVENTION

L'invention se rapporte à un dispositif de réglage d'une pince pour une machine-outil selon le préambule de la revendication 1. L'invention se rapporte aussi à une broche comportant ledit dispositif de réglage et à un procédé de réglage d'un tel dispositif.

Un tel dispositif, une telle broche et un tel procédé sont connus du document US 2 821 404 A.

### DESCRIPTION DE L'ART ANTERIEUR

On connaît des machines-outils, telles que décolleteuses, qui comprennent des broches multiples pour recevoir la matière à usiner. Celle-ci se présente généralement sous forme de barre ou de lopins. Les broches sont généralement agencées afin de tourner avec la matière à usiner autour d'un axe. L'extrémité avant (le côté où se situe la matière à usiner) de la broche comprend un moyen, telle qu'une pince, pour retenir la pièce à usiner. La fonction de cette pince est donc de serrer la matière à usiner et donc empêcher la pièce à usiner de bouger lors de l'usinage.

La matière à usiner est guidée axialement au travers de la broche par un tube de serrage. La pince peut être une partie solidaire de ce tube ou bien la pince et le tube peuvent être deux pièces différentes mais assemblées pour former une entité solidaire. Souvent la broche comprend aussi un prisonnier fixe qui a pour fonction d'orienter la pince et de l'empêcher de tourner dans son logement.

Dans les machines-outils connues, de multiples opérations sont effectuées par l'arrière de la broche, (le côté opposé par rapport au côté d'usinage de la machine-outil). Par exemple le réglage du serrage de la pince ou le changement du tube de serrage sont effectués par l'arrière. Ceci présente un inconvénient, car l'opérateur doit aller d'un côté à l'autre de la machine pour effectuer ces opérations, ce qui fait perdre du temps.

Brevet US 2 821 404 divulgue un exemple d'une solution pour un mandrin à pince. Cette solution comprend une goupille qui peut être insérée dans une fente dans la pince pour bloquer celle-ci. Le réglage même de la pince est effectué depuis l'arrière de la pince.

### RESUME DE L'INVENTION

L'objet de la présente invention est de surmonter les problèmes des solutions connues. La présente invention propose donc une solution pour régler la pince d'une broche pour une machine-outil comme expliqué plus en détail plus loin.

A cet effet, l'invention a pour objet un dispositif de réglage d'une pince selon la revendication 1.

Le dispositif proposé permet toutes les manipulations depuis l'avant de la machine alors que les solutions actuelles nécessitent de le faire par l'arrière. Ces manipulations comprennent le blocage/déblocage de la pince, le réglage de la pince et le changement de la pince. La pince peut être assemblée avec un tube de serrage pour former une pièce solidaire. Dans ce cas-là, la pince est changée ensemble avec le tube de serrage. La présente solution garantit donc une accessibilité augmentée, un temps d'intervention réduit et des coûts réduits.

L'invention a également pour objet une broche pour une machine-outil comprenant ledit dispositif de réglage ou ledit ensemble.

L'invention a également pour objet un procédé de réglage d'une pince pour une machine-outil selon la revendication 13. Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : en perspective et une vue de coupe, une broche comprenant le dispositif de réglage de la pince selon un mode de réalisation de la présente invention,
- figure 2 : en perspective, la pince de la broche illustrée sur la figure 1,
- figure 3 : en perspective, le dispositif du réglage avec la pince de la broche illustrée sur la figure 1, et
- figure 4 : vue de côté, l'extrémité d'un axe de commande qui est en contact avec un prisonnier de la broche illustrée sur la figure 1.

### DESCRIPTION DETAILLEE DES MODES DE REALISATION

En se reportant aux dessins, un mode de réalisation non limitatif d'un dispositif de réglage d'une pince pour une machine-outil et un mode de réalisation non limitatif d'un procédé de réglage de la pince conformément à la présente invention sont maintenant expliqués plus en détail.

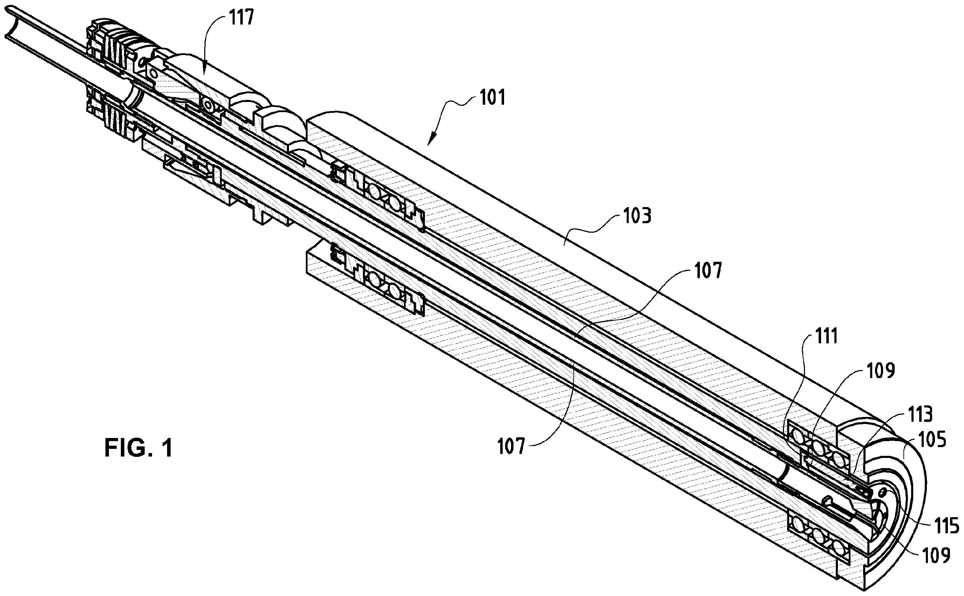

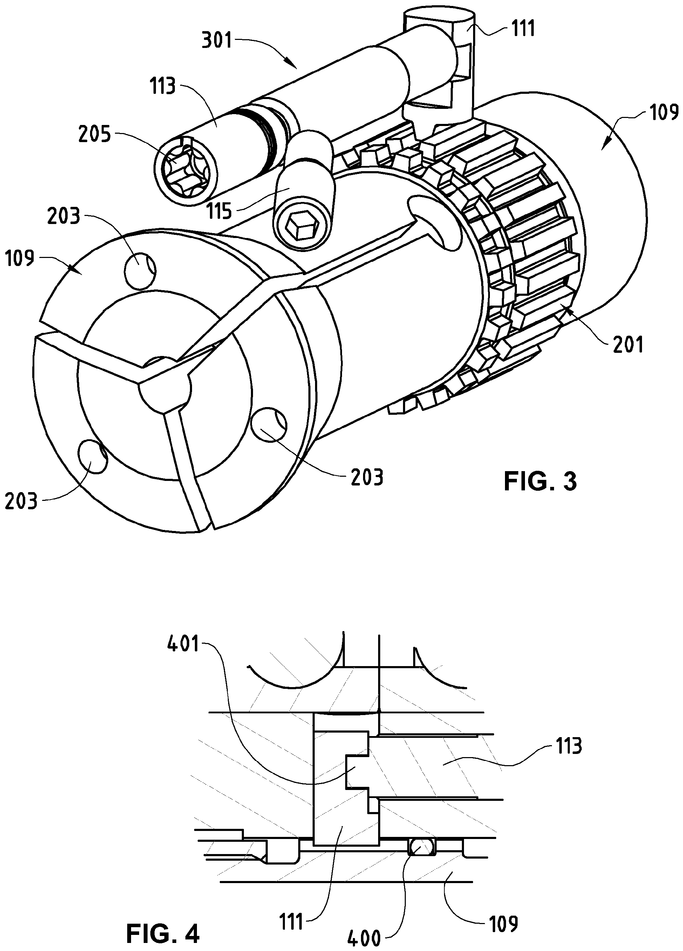

La figure 1 représente une vue de coupe et en perspective une broche 101 comprenant le dispositif de réglage 301 (illustré plus en détail sur la figure 3) selon un mode de réalisation de la présente invention. Les parties intérieures de la broche 101 sont protégées par un corps de broche 103 et un flasque de protection 105 sur le côté avancement de la matière à usiner (qui est donc sur cette figure le côté droit).

Sur la figure 1 on voit aussi un tube de serrage 107 qui traverse axialement la broche 101. Ce tube de serrage 107 est agencé pour recevoir la matière (non illustrée sur les figures) à usiner telle qu'une barre métallique. Sur le côté d'avancement de la barre on voit une pince 109 qui peut être changée et/ou ajustée comme expliqué plus loin pour recevoir des barres avec des diamètres différents. La pince 109 est donc agencée pour serrer la barre fermement en place lors de l'usinage de la barre. Dans l'exemple illustré sur les figures, la pince 109 et le tube de serrage 107 sont deux pièces différentes, assemblées par vissage et collées. Ce principe est choisi pour des raisons de coûts de fabrication. On pourrait aussi bien imaginer une solution dans laquelle la pince 109 et le tube de serrage 107 pourraient n'être qu'une seule pièce.

Un moyen d'anti-rotation de la pince 111, ci-après appelé un prisonnier 111, est aussi illustré sur la figure 1. Ce prisonnier 111 est commandé par un moyen de commande du moyen d'anti-rotation de la pince 113, ci-après appelé un axe de commande du prisonnier 113. Un moyen de blocage de l'axe de commande du prisonnier 115 est utilisé pour bloquer/débloquer l'axe de commande du prisonnier 113. La partie arrière 117 de la broche comprend entre autres un système de serrage pour tirer le tube de serrage 107 une fois le réglage de la pince 109 ayant été effectué par l'avant. Sur la figure 1, le serrage par le système de serrage est effectué en tirant le tube de serrage 107 et par conséquent la pince 109 vers la gauche sur la figure 1.

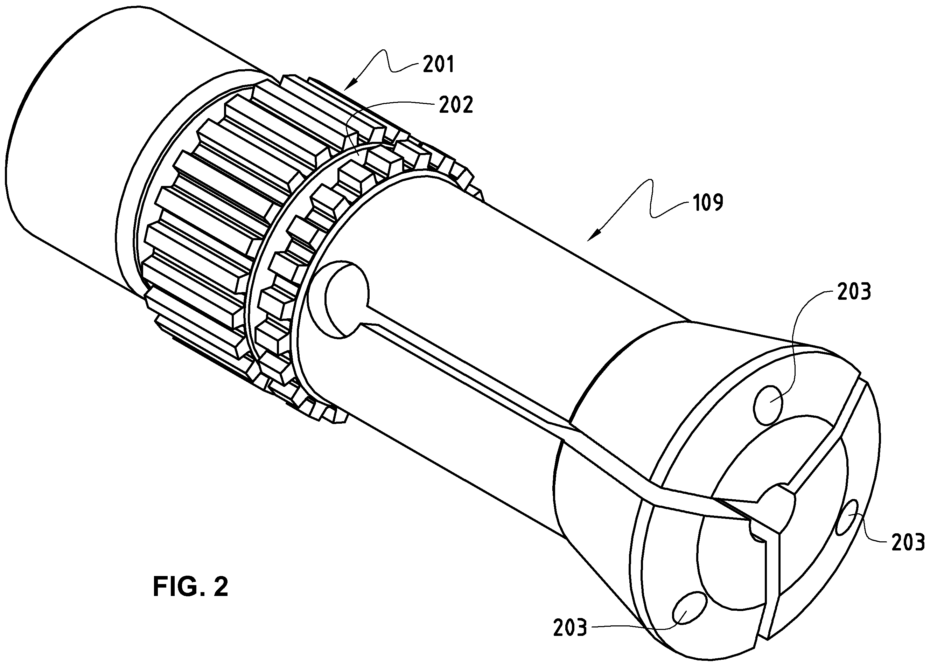

La présente invention est basée sur le principe qu'en fonction des diamètres de barres à usiner, la pince 109 et éventuellement le tube de serrage 107 doivent être adaptés. La figure 2 illustre plus en détail la pince 109 et la figure 3 montre la pince 109 avec le dispositif du réglage 301 de la pince 109. Selon cet exemple, le dispositif de réglage 301 comprend les éléments suivants : le prisonnier 111, l'axe de commande 113 et le moyen de blocage de l'axe de commande 115. Comme illustré sur les figure 2 et 3, la pince 109 comprend aussi une partie dentée 201 autour de la pince 109 pour recevoir le prisonnier 111 et une gorge 202 permettant d'y glisser un joint 400 de type O-ring (illustré sur la figure 4). Cette gorge 202 ou rainure est donc destinée à recevoir un joint 400 permettant d'étanchéifier la partie arrière de la broche. Ceci, afin de diminuer la fréquence de nettoyage des tubes de serrage 107.

Habituellement, le prisonnier 111 est fixe. Il a pour fonction d'orienter la pince 109 et de l'empêcher de tourner dans son logement. Dans la présente invention, le prisonnier 111 est mobile, actionné par l'axe de commande 113, ce qui permet de le sortir de la denture 201 et de tourner la pince 109 ensemble avec le tube de serrage 107. La rotation de la pince 109 est effectuée avec un outillage non représenté qui se prend dans les trous frontaux 203 de la pince 109. La rotation de la pince 109 fait bouger la pince 109 axialement. Selon le sens de rotation appliqué, la pince 109 va rentrer ou sortir de son logement, ce qui augmente ou diminue la force de serrage. Par exemple, sur la figure 1, si la pince 109 bouge vers la gauche, la pince 109 est serrée, alors que si la pince 109 bouge vers la droite, la pince 109 est desserrée. Une fois le réglage effectué, il faut remettre en place le prisonnier 111 par l'intermédiaire de son axe de commande 113.

Dans la présente invention le prisonnier 111 est donc amovible et commandé depuis devant. Dans l'exemple illustré sur les figure 3 et 4, l'axe de commande 113 est commandé depuis devant en le tournant mécaniquement en utilisant un outil qui se prend dans le trou 205 de l'axe de commande 113. L'extrémité de l'axe de commande 113 qui est en contact avec le prisonnier 111 comprend un téton 401, dont la position est légèrement excentrique au niveau de section transversale de l'axe de commande 113. Quand on tourne l'axe de commande 113, le téton 401 bouge verticalement ce qui fait bouger le prisonnier 111 verticalement sur la figure 4. Néanmoins, l'axe de commande 113 pourrait être différent, par exemple un ressort, opérable par une pression hydraulique, etc. Le prisonnier 111 lui-même peut être un dispositif permettant de libérer et/ou bloquer la pince 109 en rotation, une fois le réglage effectué. La configuration illustrée sur la figure 2 permet à la pince 109 toujours de bouger axialement, pour son ouverture ou fermeture, quand le prisonnier 111 est en place.

La configuration illustrée ci- dessus permet donc à l'opérateur de changer la pince 109 et/ou le tube de serrage 107, qui fait également office de tube de réduction le cas échéant, et de régler le serrage de la pince 109 sans avoir à passer à l'arrière de la machine. L'opération du changement du tube de serrage 107 avec la pince 109, l'opération de l'introduction d'une nouvelle barre dans la pince 109 et l'opération du réglage de la pince comprend, selon cet exemple, les étapes suivantes :
- Le desserrage du tube de serrage 107 et de la pince 109 par le système de serrage ;
- Le déblocage de l'axe de commande 113 en utilisant le moyen de blocage de l'axe de commande 115 ;
- Le déblocage de la pince 109 en utilisant l'axe de commande 113 ;
- La rotation de la pince 109 en utilisant un outil qui se prend dans les trous 205 de la pince 109;
- L'enlèvement de la pince 109 et du tube de serrage 107 par devant une fois la pince 109 est complètement desserrée ;
- L'insertion d'une nouvelle pince 109 et d'un nouveau tube de serrage 107 dans la broche 101 ;
- Le serrage léger de la pince 109 en tournant l'outil qui se prend dans les trous 203 de la pince ;
- L'insertion depuis devant ou derrière d'une nouvelle barre dans la pince 109 ;
- Le réglage de la pince 109 en tournant l'outil qui se prend dans les trous 203 de la pince. Le réglage est effectué une fois la barre étant légèrement serrée dans la pince 109 et peut difficilement bouger axialement dans la pince 109 ; et
- Le serrage du tube de serrage 107 et de la pince 109 par le système de serrage.

On pourrait aussi envisager plusieurs variations dans la configuration expliquée ci-dessus sans sortir du cadre de la présente invention. Par exemple il est possible de changer la pince 109 mais pas le tube de serrage 107.

## Revendications

1. Un dispositif de réglage (301) d'une pince (109) pour une broche (101) d'une machine-outil, le dispositif (301) comprenant :
• une pince (109) pour retenir la matière à usiner ;
• un moyen d'anti-rotation (111) de la pince (109) agencé pour être engagé avec la pince (109) pour bloquer celle-ci en rotation ou pour être retiré de la pince (109) pour permettre celle-ci de tourner ; et
• un moyen de commande (113) du moyen d'anti-rotation (111) de la pince (109),
**caractérisé en ce que** la pince (109) comprend une partie dentée (201) autour de la pince (109) pour recevoir le moyen d'anti-rotation (111) de la pince (109), et la pince (109) est agencée pour permettre son réglage depuis le côté de la pince (109) où se trouve la partie de la matière à usiner.

2. Le dispositif (301) selon l'une quelconque des revendications précédentes, dans lequel le moyen de commande (113) est connecté à l'une de ses extrémités au moyen d'anti-rotation (111) de la pince (109) pour bloquer/débloquer le moyen d'anti-rotation (111) de la pince (109), et dans lequel le moyen de commande (113) est agencé pour être commandé du côté où se trouve la partie de matière à usiner.

3. Le dispositif (301) selon la revendication 2, dans lequel le moyen de commande (113) est un ressort ou un axe de commande agencé pour être commandé pneumatiquement ou hydrauliquement ou commandé en tournant cet axe de commande mécaniquement.

4. Le dispositif (301) selon l'une quelconque des revendications précédentes, dans lequel le dispositif (301) comprend en plus un moyen de blocage/déblocage du moyen de commande (113) de la pince (109).

5. Le dispositif (301) selon l'une quelconque des revendications précédentes, dans lequel à l'état de déblocage, la pince (109) est agencée pour tourner en rotation et ainsi sortir de son logement ce qui diminue la force de serrage, et à l'état de blocage, la pince (109) est bloquée en rotation.

6. Le dispositif selon la revendication 5, dans lequel la pince (109) est agencée pour bouger axialement dans la broche (101) à l'état de déblocage et à l'état de blocage pour être serrée/desserrée.

7. Le dispositif selon l'une quelconque des revendications 5 à 6, dans lequel la pince (109) comprend une rainure (202) sur le pourtour extérieur pour recevoir un joint d'étanchéité (400).

8. Le dispositif selon l'une quelconque des revendications 5 à 7, dans lequel à l'état de déblocage la pince (109) est agencée pour être tournée par un outil depuis le côté où se trouve la partie de la matière à usiner pour faire bouger axialement la pince (109) dans la broche (101) et ainsi ajuster la force de serrage.

9. Le dispositif selon l'une quelconque des revendications 5 à 8, dans lequel le dispositif (301) comprend en plus un tube de serrage (107), la pince (109) étant agencée pour tourner avec le tube de serrage (107) à l'état de déblocage.

10. Une broche (101) comprenant le dispositif (301) selon l'une quelconque des revendications précédentes.

11. La broche (101) selon la revendication 10, dans laquelle la broche (101) comprend en plus un système de serrage pour faire bouger axialement la pince (109) dans la broche (101) après le réglage de la pince (109) depuis le côté où se trouve la partie de la matière à usiner.

12. La broche (101) selon l'une quelconque des revendications 10 à 11, dans laquelle le système de serrage se trouve du côté opposé par rapport au côté où se trouve la partie de la matière à usiner.

13. Un procédé de réglage d'une pince (109) pour une machine-outil comprenant un système de serrage de la pince (109) situé du côté opposé par rapport au côté où se trouve la partie de la matière à usiner, le procédé comprenant :
• l'insertion d'une pièce à usiner dans la pince (109) agencée pour retenir la matière à usiner et comprenant une partie dentée autour de celle-là (109) pour recevoir un moyen d'anti-rotation (111) de la pince (109) ;
• le réglage de la pince de telle manière que la pièce à usiner bouge axialement difficilement dans la pince (109), et dans lequel, après le réglage, le moyen d'anti-rotation (111) est engagé avec la pince (109) pour bloquer celle-ci en rotation ; et
• le serrage de la pince (109) par le système de serrage,
dans lequel le réglage de la pince est effectué depuis le côté de la pince où se trouve la partie de la matière à usiner.

## Patentansprüche

1. Eine Vorrichtung zur Einstellung (301) einer Spannzange (109) für eine Spindel (101) einer Werkzeugmaschine, wobei die Vorrichtung (301) umfasst:
• Eine Spannzange (109) zum Halten des zu bearbeitenden Materials;
• Ein Mittel zur Drehblockierung (111) der Spannzange (109), welches angeordnet ist, um mit der Spannzange (109) in Eingriff gebracht zu werden, um diese in Rotation zu blockieren oder von der Spannzange (109) zurückgezogen zu werden, um dieser Drehen zu gestatten; und
• Ein Steuermittel (113) für das Drehblockierungsmittel (111) der Spannzange (109),
**dadurch gekennzeichnet, dass** die Spannzange (109) einen Zahnabschnitt (201) rund um die Spannzange (109) zur Aufnahme des Drehblockierungsmittels (111) der Spannzange (109) aufweist, und die Spannzange (109) ausgebildet ist, um ihre Einstellung von der Seite der Spannzange (109) zu ermöglichen, an welcher sich der zu bearbeitende Materialabschnitt befindet.

2. Die Vorrichtung (301) nach einem der vorhergehenden Ansprüche, wobei das Steuermittel (113) an einer seiner Enden mit dem Drehblockierungsmittel (111) der Spannzange (109) verbunden ist, um das Drehblockierungsmittel (111) der Spannzange (109) zu blockieren/deblockieren und wobei das Steuermittel (113) ausgebildet ist, um von der Seite gesteuert zu werden, an welcher sich das zu bearbeitende Material befindet.

3. Die Vorrichtung (301) nach Anspruch 2, wobei das Steuermittel (113) eine Feder oder eine Steuerspindel, welche ausgebildet ist, um pneumatisch oder hydraulisch gesteuert zu werden, oder um durch mechanisches Drehen dieser Steuerspindel gesteuert zu werden.

4. Die Vorrichtung (301) nach einem der vorhergehenden Ansprüche, bei welcher die Vorrichtung (301) weiter ein Mittel zum Blockieren/Deblockieren des Steuermittels (113) der Spannzange (109) umfasst.

5. Die Vorrichtung (301) nach einem der vorhergehenden Ansprüche, bei welcher in dem entsperrten Zustand, die Spannzange (109) ausgebildet ist, um zu rotieren und auf diese Weise ihre Aufnahme zu verlassen, so dass sich die Klemmkräfte reduzieren, und in dem blockierten Zustand die Spannzange (109) drehblockiert ist.

6. Die Vorrichtung nach Anspruch 5, wobei die Spannzange (109) ausgebildet ist, um sich axial in der Spindel (101) zwischen einer deblockierten Position und einer blockierten Position zu bewegen, um gespannt/entspannt zu werden.

7. Die Vorrichtung nach einem der Ansprüche 5 bis 6, bei welcher die Spannzange (109) eine Ausnehmung (202) an dem Aussenumfang aufweist, um einen Dichtring (400) aufzunehmen.

8. Die Vorrichtung nach einem der Ansprüche 5 bis 7, bei welcher in dem entsperrten Zustand die Spannzange (109) ausgebildet ist, um von einem Werkzeug von der Seite gedreht zu werden, an welcher sich der zu bearbeitende Materialabschnitt befindet, um die Spannzange (109) axial in der Spindel (101) zu bewegen und so die Klemmkraft einzustellen.

9. Die Vorrichtung nach einem der Ansprüche 5 bis 8, bei welcher die Vorrichtung (301) weiter ein Klemmrohr (107) umfasst, wobei die Spannzange (109) ausgebildet ist, um mit dem Klemmrohr (107) in dem entsperrten Zustand zu drehen.

10. Eine Spindel (101), umfassend die Vorrichtung (301) nach einem der vorhergehenden Ansprüche.

11. Die Spindel (101) nach Anspruch 10, bei welcher die Spindel (101) weiter ein Klemmsystem umfasst, um die Spannzange (109) axial in der Spindel (101) nach der Einstellung der Spannzange (109) von der Seite zu bewegen, an welcher sich der zu bearbeitende Materialabschnitt befindet.

12. Die Spindel (101) nach einem der Ansprüche 10 bis 11, bei welcher sich das Klemmsystem an der gegenüberliegenden Seite in Bezug zu der Seite befindet, an welcher sich der zu bearbeitende Materialabschnitt befindet.

13. Ein Verfahren zur Einstellung einer Spannzange (109) für eine Werkzeugmaschine, umfassend ein Klemmsystem der Spannzange (109), welches an der gegenüberliegenden Seite in Bezug zu der Seite angeordnet ist, an welcher sich der zu bearbeitende Materialabschnitt befindet, wobei das Verfahren umfasst:
• das Einführen eines zu bearbeitenden Stücks in die Spannzange (109), welche ausgebildet ist, um das zu bearbeitende Material zu halten, und welche einen Zahnabschnitt um diese (109) umfasst, um ein Mittel zur Drehblockierung (111) der Spannzange (109) aufzunehmen;
• das Einstellen der Spannzange derart, dass sich das zu bearbeitende Stück mit Schwierigkeiten in der Spannzange (109) axial bewegt und wobei nach der Einstellung das Drehblockierungsmittel (111) in Eingriff mit der Spannzange (109) steht, um letztere in Rotation zu blockieren; und
• das Festklemmen der Spannzange (109) durch das Klemmsystem,
bei welchem das Einstellen der Spannzange von der Seite der Spannzange ausgeführt wird, an welcher sich der zu bearbeitende Materialabschnitt befindet.

## Claims

1. A device for adjusting (301) a collet (109) for a spindle (101) of a machine tool, the device (301) comprising:
• a collet (109) for holding the material to be machined;
• a means of anti-rotation (111) of the collet (109) arranged to be engaged with the collet (109) for blocking the latter in rotation or to be withdrawn from the collet (109) to allow the latter to turn; and
• a means of control (113) of the anti-rotation means (111) of the collet (109),
**characterized in that** the collet (109) comprises a toothed part (201) around the collet (109) for receiving the anti-rotation means (111) of the collet (109), and the collet (109) is designed to allow its adjustment from the side of the collet (109) where the portion of the material to be machined is located.

2. The device (301) according to any one of the preceding claims, wherein the control means (113) is connected at one of its ends to anti-rotation means (111) of the collet (109) to block/unblock the anti-rotation means (111) of the collet (109), and wherein the control means (113) is designed to be controlled from the side where the portion of material to be machined is located.

3. The device (301) according to claim 2, wherein the control means (113) is a spring or a control spindle arranged to be controlled pneumatically or hydraulically or controlled by turning this control spindle mechanically.

4. The device (301) according to any one of the preceding claims, wherein the device (301) further comprises a means of blocking/unblocking of the control means (113) of the collet (109).

5. The device (301) according to any one of the preceding claims, wherein in the state of unblocking, the collet (109) is designed to turn in rotation and thus leave its accommodation which reduces the force of clamping, and in the state of blocking the collet (109) is blocked in rotation.

6. The device according to claim 5, wherein the collet (109) is designed to move axially in the spindle (101) in the unblocking position and in the blocking position in order to be clamped/unclamped.

7. The device according to any one of the claims 5 to 6, wherein the collet (109) comprises a groove (202) on the outer periphery to receive a sealing ring (400).

8. The device according to any one of the claims 5 to 7, wherein in the state of unblocking the collet (109) is designed to be turned by a tool from the side where the portion of the material to be machined is located to make the collet (109) move axially in the spindle (101) and thus adjust the force of clamping.

9. The device according to any one of the claims 5 to 8, wherein the device (301) further comprises a clamping tube (107), the collet (109) being designed to turn with the clamping tube (107) in the state of unblocking.

10. A spindle (101) comprising the device (301) according to any one of the preceding claims.

11. The spindle (101) according to claim 10, wherein the spindle (101) further comprises a clamping system to make the collet (109) move axially in the spindle (101) after the adjustment of the collet (109) from the side where the portion of the material to be machined is located.

12. The spindle (101) according to any one of the claims 10 to 11, wherein the clamping system is located on the opposite side with respect to the side where the portion of the material to be machined is located.

13. A method of adjusting a collet (109) for a machine tool comprising a system of clamping of the collet (109) situated on the opposite side with respect to the side where the portion of the material to be machined is located, the method comprising:
• the insertion of a piece to be machined in the collet (109) designed to hold the material to be machined and comprising a toothed part around it (109) to receive a means of anti-rotation (111) of the collet (109) ;
• the adjustment of the collet in such a manner that the piece to be machined moves axially with difficulty in the collet (109), and wherein, after the adjustment, the anti-rotation means (111) is engaged with the collet (109) to block the latter in rotation; and
• the clamping of the collet (109) by the clamping system,
wherein the adjustment of the collet is carried out from the side of the collet where the portion of the material to be machined is located.
